# EUROPÄISCHE PATENTSCHRIFT

(11) **EP 2 234 851 B1**
(45) Veröffentlichungstag und Bekanntmachung des Hinweises auf die Patenterteilung: **14.12.2011**
(21) Anmeldenummer: 08867842.0
(22) Anmeldetag: 27.10.2008
(51) Int. Cl.: B60S 1/08

(54) **OPTISCHE REGENSENSORVORRICHTUNG FÜR EIN KRAFTFAHRZEUG**
OPTICAL RAIN SENSOR DEVICE FOR A MOTOR VEHICLE
DISPOSITIF OPTIQUE DE DETECTION DE PLUIE POUR UN VEHICULE AUTOMOBILE

(30) Priorität: 21.12.2007 DE 102007062258
(43) Veröffentlichungstag der Anmeldung: 06.10.2010
(73) Patentinhaber: Robert Bosch GmbH, 70442 Stuttgart (DE)
(72) Erfinder: BOCHAT, Ralf, 77830 Buehlertal (DE)
(86) Internationale Anmeldenummer: PCT/EP2008/064511
(87) Internationale Veröffentlichungsnummer: WO 2009/083291

(56) Entgegenhaltungen:
- DE-A1- 10 261 244
- US-A- 5 661 303

## Beschreibung

Die Erfindung betrifft eine optische Regensensorvorrichtung für ein Kraftfahrzeug gemäß dem Oberbegriff von Anspruch 1.

Aus dem Stand der Technik sind optische Regensensoren bzw. Regensensorvorrichtungen für Kraftfahrzeuge bekannt, welche im Fahrzeuginnenraum über ein Koppelmedium (z. B. Silikon) an die Windschutzscheibe angekoppelt sind. Der optische Regensensor leitet dabei einen Lichtstrahl eines Senders bzw. einer Strahlungsquelle über ein Linsensystem, d. h. eine Senderoptikanordnung in die Windschutzscheibe. An der Scheibenoberfläche wird das Licht totalreflektiert und über eine weitere Linse bzw. eine Empfängeroptikanordnung auf einen Lichtdetektor bzw. Empfänger geleitet. Je mehr Wasser sich auf der Scheibenoberfläche der Windschutzscheibe befindet, desto geringer ist die Reflexion und damit auch das von dem Lichtdetektor gemessene Signal. Der optische Regensensor kann die Wischeranlage des Kraftfahrzeugs in Abhängigkeit der detektierten Regenmenge steuern und automatisch die effektivste Stufe der Wischgeschwindigkeit auswählen.

Optische Regensensoren der vorstehend beschriebenen Ausführungsform sind beispielsweise aus der DE 102 61 244 A1 bekannt.

Der Lichtdetektor sollte möglichst von Fremdlicht (z. B. Sonnenlicht) abgeschirmt sein, um Störungen zu vermeiden. Neben dem Fremdlicht durch Sonneneinstrahlung von außen stellen auch Feuchtigkeit und Verschmutzung im Fahrzeuginnenraum eine der Störgrößen bei der Regenmengenbestimmung dar. Unter gewissen Umweltbedingungen kommt es an der Innenseite der Windschutzscheibe und im Regensensor, insbesondere an den im Regensensor befindlichen optischen bzw. optoelektronischen bzw. elektronischen Bauelementen, nämlich den Linsensystemen, der Strahlungsquelle und dem Lichtempfänger zu Beschlag, welcher die optischen Eigenschaften der optischen Strecke zwischen Strahlungsquelle und Lichtempfänger im Regensensor beeinflusst. Beschlag äußert sich in einer Vielzahl von Wassertröpfchen unterschiedlicher Größe auf den Oberflächen, welche die geometrischen und reflexiven Eigenschaften der Bauelemente, insbesondere der Linsensysteme beeinflussen. Ein an dem Linsensystem auftretender Beschlag sorgt in der Regel für eine schlechtere Transmission der optischen Strecke im Regensensor, da die Lichtstrahlen durch die Vielzahl kleiner Wassertröpfchen, welche optisch ebenfalls wie kleine Linsen wirken, nicht mehr im korrekten Winkel in die Windschutzscheibe eingekoppelt werden können. Lediglich ein Teil des Lichts trifft daher in einem für die Totalreflexion notwendigen Winkel von 45° auf die Oberfläche der Windschutzscheibe. Dies bedeutet, dass ein deutlich höherer Vorhalt für die Scheibenabdeckung des Regensensors bezüglich der Transmissionseigenschaften der Windschutzscheibe berücksichtigt werden muss. Des weiteren erhält die Linsenoberfläche durch die Vielzahl der Wassertröpfchen andere reflexive Eigenschaften. Dadurch, dass bei Vorhandensein eines Beschlags das von dem Regensensor emittierte Licht nicht mehr zwei (Luft - Linsensystem - Luft), sondern drei optische Medien (Luft - Wasser - Linsensystem - Wasser - Luft) durchlaufen muss, wird die Anzahl der Grenzflächen zwischen optisch unterschiedlichen Medien, an denen ein bestimmter Teil des Lichts reflektiert wird, von zwei auf vier erhöht. Auch dies führt zu einem Wirkungsgradverlust des optischen Systems. Des weiteren können in Abhängigkeit der Größe der Wassertröpfchen im Zusammenhang mit Vibrationen, welche insbesondere durch den Antriebsmotor des Kraftfahrzeugs oder durch Fahraktivität hervorgerufen werden, trotz trockener Windschutzscheibe irrtümlich Wischzyklen initiiert werden. Im Gegensatz zur Strahlungsquelle wird in dem Lichtempfänger des optischen Regensensors kaum Verlustleistung bzw. Wärme erzeugt, so dass sich dort auch bevorzugt Beschlag einstellt. Aus diesen Gründen ist eine Beschlagsreduzierung an den optischen bzw. optoelektronischen Bauelementen, insbesondere dem Linsensystem des optischen Regensensors wünschenswert.

Aus der Praxis bekannt sind Regensensorsysteme bei welchen der Beschlag elektrisch durch ein Heizungsmodul reduziert wird. Das Linsensystem wird bei Vorliegen einer Beschlagsgefahr (insbesondere bei Temperaturen unterhalb von 25°C) leicht erhitzt, um das Mikroklima im Regensensor hinsichtlich des Taupunkts zu verändern und damit die Entstehung des Beschlags zu verhindern bzw. diesen zu reduzieren.

Auch Verschmutzungen können die optischen Eigenschaften der optischen Bauelemente negativ beeinflussen. Verschmutzungen verursachen regelmäßig eine Filterwirkung bzw. eine Absorption des Lichts. In den bekannten Systemen verwendet man daher geschlossene Gehäuse für die Regensensoren, um den Einfluss von Partikeln aus der Fahrzeuginnenraumluft so gering wie möglich zu halten.

### Vorteile der Erfindung

Die erfindungsgemäße optische Regensensorvorrichtung für ein Kraftfahrzeug, mit mehreren Bauelementen, nämlich wenigstens einer elektromagnetischen Strahlungsquelle, wenigstens einer Empfangseinrichtung, wenigstens einer Senderoptikanordnung und wenigstens einer Empfängeroptikanordnung, wobei mittels der wenigstens einen Empfangseinrichtung eine von der wenigstens einen Strahlungsquelle emittierte elektromagnetische Strahlung empfangbar ist, wobei die elektromagnetische Strahlung von der wenigstens einen Strahlungsquelle mittels der wenigstens einen Senderoptikanordnung an eine Grenzfläche der Windschutzscheibe des Kraftfahrzeugs mit dem Fahrzeugäußeren geleitet, dort reflektiert und mittels der wenigstens einen Empfängeroptikanordnung weiter auf die wenigstens eine Empfangseinrichtung geleitet wird, wobei die Oberfläche wenigstens eines der Bauelemente wenigstens teilweise mit einer Nanobeschichtung versehen ist, welche eine photokatalytische Selbstreinigung der Oberflächen bewirkt, hat den Vorteil, dass ein Beschlagen und eine Verunreinigung der Oberflächen der optischen bzw. optoelektronischen bzw. elektronischen Bauelemente weitestgehend vermieden bzw. reduziert wird.

Es wird vorgeschlagen, die insbesondere optisch wirksamen Oberflächen der optischen Bauelemente, insbesondere die Senderoptikanordnung, die Empfängeroptikanordnung, die elektromagnetische Strahlungsquelle und/oder die Empfangseinrichtung, des optischen Regensensors mit einer speziellen Beschichtung zu versehen, die es vermag eine photokatalytische Selbstreinigung der Oberflächen zu bewirken. Als "photokatalytische Selbstreinigung" bezeichnet man die Eigenschaft von Oberflächen, welche mit einer Nanobeschichtung mit Nanopartikeln vorzugsweise aus Titandioxid (TiO₂) beschichtet wurden und dadurch in der Lage sind, bei Bestrahlung mit Sonnenlicht (insbesondere UV-Licht) organische Materialien auf der Oberfläche zu zersetzen. Die Oberflächen bleiben daher sauber. Des weiteren wirkt eine solche Beschichtung antimikrobiell. Darüber hinaus führt eine derartige Beschichtung dazu, dass an den Oberflächen Wasser keine Tröpfchen mehr bildet, sondern lediglich eine dünne Schicht, wodurch ein Beschlagen dieser Oberflächen weitestgehend vermieden wird. Derartige Oberflächen werden auch als superhydrophil bezeichnet.

Durch die photokatalytische Selbstreinigung der Bauelemente ist es nun möglich, für optische Regensensoren auch offene Gehäuse zu verwenden, was insbesondere für eine Integration weiterer Funktionen in den Regensensor wie beispielsweise eine Taupunktsensorik (auch mit einer Feuchtigkeitsmessung), einen Luftgütesensor oder dergleichen von Vorteil wäre. Für beide Funktionen ist ein Luftaustausch mit der Umgebung vonnöten.

Durch die Antibeschlagwirkung der Nanobeschichtung kann auf ein Heizmodul im Regensensor gänzlich verzichtet werden. Die optischen Eigenschaften werden bei Beschlagsneigung nur noch geringfügig durch einen dünnen (nahezu unsichtbaren) Wasserfilm beeinflusst. Eine Beschichtung mit Nanopartikeln aus Titandioxid bewirkt eine Kostenersparnis und senkt den Bauraumbedarf auf der Platine, da das Heizmodul nicht mehr benötigt wird. Dadurch kann der Platzbedarf des Regensensors reduziert oder die Funktionalität des Regensensors - bei gleichbleibendem Platzbedarf - erweitert werden.

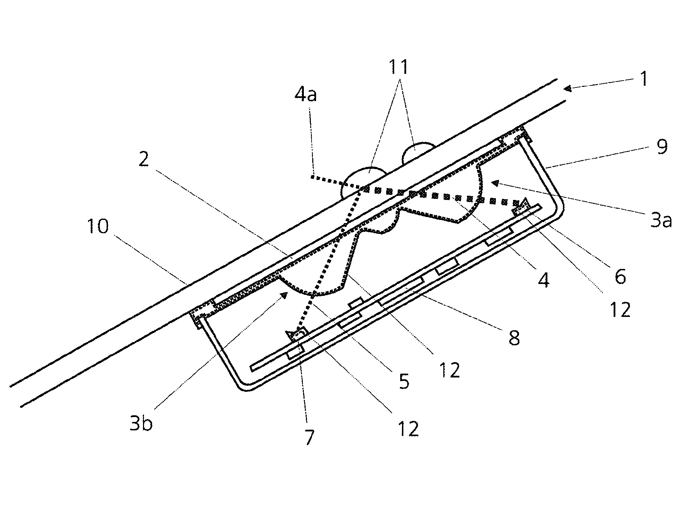

Nachfolgend ist anhand der Zeichnung ein Ausführungsbeispiel der Erfindung prinzipmäßig beschrieben.

### Kurzbeschreibung der Zeichnung

Die einzige Figur der Zeichnung zeigt eine vereinfachte Darstellung einer erfindungsgemäßen optischen Regensensorvorrichtung.

### Beschreibung von Ausführungsbeispielen

In der Figur ist eine erfindungsgemäße optische Regensensorvorrichtung dargestellt, welche nach dem nachfolgend beschriebenen Prinzip arbeitet.

Eine elektromagnetische Strahlungsquelle 6 wie beispielsweise eine Infrarot-LED oder dergleichen sendet elektromagnetische Strahlung 4 (das sogenannte Nutzlicht) unter einem bestimmten Winkel von der Innenseite einer Scheibe bzw. Windschutzscheibe 1 her, also üblicherweise vom Fahrgastraum eines Kraftfahrzeugs (nicht dargestellt) aus, in Richtung der Windschutzscheibe 1. Die Strahlung 4 passiert die Grenzfläche zwischen Innenraum und Windschutzscheibe 1 und wird gegen die von Windschutzscheibe 1 und dem Fahrzeugäußeren gebildete Grenzfläche 10 gelenkt, die in diesem Bereich als sensitive Fläche bezeichnet wird. In der Regel sind dann die Lichtstrahlen in der Windschutzscheibe 1 parallel. Der Einfallswinkel der elektromagnetischen Strahlung 4 gegenüber der Grenzfläche 10 ist dabei so gewählt, dass die elektromagnetische Strahlung 4 bei einer nicht beispielsweise durch Regentropfen 11 benetzten Windschutzscheibe 1 an der Grenzfläche 10 nach den Gesetzen der Optik in Richtung der Innenseite der Windschutzscheibe 1 als reflektierte Strahlung 5 totalreflektiert wird und von einem in der Nähe der Scheibeninnenseite angeordneten beispielsweise als Infrarot-LRD ausgebildeten Empfänger 7 bzw. einer Empfangseinrichtung detektiert wird. Bei einer Benetzung der Scheibe 1 mit den Regentropfen 11 wird diese Totalreflexion wie aus der Figur ersichtlich aufgrund der geänderten Brechzahlverhältnisse an der Grenzfläche 10 gestört bzw. aufgehoben, so dass ein Teil 4a der elektromagnetischen Strahlung 4 nach außen ausgekoppelt wird und an dem Empfänger 7 weniger Strahlung 5 als im Falle der Totalreflexion ankommt. Aus dem Einbruch des Lichteinfalls (bzw. den Signaldifferenzen) schließt eine der Strahlungsquelle 6 und dem Empfänger 7 zugeordnete, z. B. auf einer Leiterplatte angeordnete Auswerteeinheit 8 auf den vorliegenden Benetzungsgrad und steuert entsprechend Wischvorgänge des Scheibenwischers. Um dieses Grundprinzip zu realisieren, sind Strahlungsquelle 6, Empfänger 7 und die Auswerteeinheit 8 zusammen mit einem nicht dargestellten Steuergerät in einem Gehäuse 9 untergebracht, das zum Zwecke der effektiven Lichtstrahlführung mit einer der Strahlungsquelle 6 zugeordneten Senderoptikanordnung bzw. Einkoppeloptik 3a und einer dem Empfänger 7 zugeordneten Empfängeroptikanordnung bzw. Auskoppeloptik 3b ausgerüstet ist und zum Zwecke der ungestörten Lichtleitung und Einkopplung der Strahlung 4 bzw. 5 in die bzw. aus der Windschutzscheibe 1 mit einem optischen Koppelmedium als Zwischenschicht 2, z. B. aus Silikon, luftblasenfrei an die Windschutzscheibe 1 angekoppelt ist. Die genannten Einkoppel- bzw. Auskoppeloptiken 3a, 3b bestehen dabei üblicherweise aus Linsen bzw. Linsensystemen, deren eine Seite konvex und deren andere Seite plan ist. Die Senderoptikanordnung 3a, die Empfängeroptikanordnung 3b, die elektromagnetische Strahlungsquelle 6 und der Empfänger 7 gehören zu den optischen Bauelementen 3a, 3b, 6, 7 der optischen Regensensorvorrichtung, wobei die elektromagnetische Strahlungsquelle 6 und der Empfänger 7 aufgrund ihrer Funktion selbstverständlich auch als optoelektronische bzw. elektronische Bauelemente bezeichnet werden können.

Im vorliegenden Ausführungsbeispiel sind nun erfindungsgemäß die Oberflächen der elektromagnetischen Strahlungsquelle 6, des Empfängers 7, der Empfängeroptikanordnung 3b und der Senderoptikanordnung 3a bzw. der Linsensysteme mit einer Nanobeschichtung 12 versehen, welche eine photokatalytische Selbstreinigung der Oberflächen bewirkt. Dadurch wird in vorteilhafter Weise ein Beschlagen und eine Verunreinigung dieser Oberflächen weitestgehend vermieden bzw. reduziert. Die Nanobeschichtung 12 weist dazu Nanopartikel aus Titandioxid (TiO₂) auf.

In weiteren nicht dargestellten Ausführungsbeispielen können selbstverständlich auch nur die Oberflächen ausgewählter optischer Bauelemente 3a, 3b, 6, 7 , insbesondere auch nur teilweise (z. B. nur der optisch wirksame Teil der Oberfläche), mit einer Nanobeschichtung 12 versehen sein, welche eine photokatalytische Selbstreinigung der Oberfläche bewirkt.

Grundlage der Selbstreinigung ist die sogenannte Photokatalyse. Titandioxid ist ein Halbleiter, in welchem einstrahlendes Licht Elektron-Loch-Paare erzeugt, wenn die Energie der Photonen größer als die der Bandlücke ist (innerer photoelektrischer Effekt). Die Elektronen oder Löcher können in Titandioxid an die Oberfläche diffundieren und erzeugen dort Radikale, die zur Zersetzung organischer Substanzen führen. Insbesondere die Löcher haben eine hohe oxidative Wirkung. Aus Wasser werden OH-Radikale gebildet. Organische Substanzen werden dadurch zersetzt. Endprodukte sind oftmals CO₂ und Wasser. Die superhydrophilen Eigenschaften der Oberflächen kommen durch Sauerstoff-Leerstellen an der Titandioxid-Oberfläche zustande. An diesen Stellen werden OH-Gruppen gebunden, die zur guten Benetzung mit Wasser führen.

Es sind Produkte verfügbar mit welchen Nanobeschichtungen aus Titandioxid erzeugt werden können. Ein Beispiel hierfür ist das nach dem AEROSIL®-Verfahren hergestellte VP TiO₂ P90 (hydrophiles pyrogenes Titandioxid).

Das Aufbringen der Beschichtung mit Nanopartikeln aus Titandioxid auf die Optikanordnungen 3a, 3b bzw. den Lichtleiter sollte vorzugsweise während der Sensormontage erfolgen, falls die Optikanordnungen 3a, 3b aus mehreren Einzelteilen zusammengesetzt ist. Sind die Optikanordnungen 3a, 3b wie im vorliegenden Ausführungsbeispiel einstückig ausgeführt, so kann der Beschichtungsvorgang auch vorab erfolgen.

## Patentansprüche

1. Optische Regensensorvorrichtung für ein Kraftfahrzeug, mit mehreren Bauelementen (3a,3b,6,7), nämlich wenigstens einer elektromagnetischen Strahlungsquelle (6), wenigstens einer Empfangseinrichtung (7), wenigstens einer Senderoptikanordnung (3a) und wenigstens einer Empfängeroptikanordnung (3b), wobei mittels der wenigstens einen Empfangseinrichtung (7) eine von der wenigstens einen Strahlungsquelle (6) emittierte elektromagnetische Strahlung (4,5) empfangbar ist, wobei die elektromagnetische Strahlung (4,5) von der wenigstens einen Strahlungsquelle (6) mittels der wenigstens einen Senderoptikanordnung (3a) an eine Grenzfläche (10) der Windschutzscheibe (1) des Kraftfahrzeugs mit dem Fahrzeugäußeren geleitet, dort reflektiert und mittels der wenigstens einen Empfängeroptikanordnung (3b) weiter auf die wenigstens eine Empfangseinrichtung (7) geleitet wird, **dadurch gekennzeichnet, dass** die Oberfläche wenigstens eines der Bauelemente (3a,3b,6,7) wenigstens teilweise mit einer Nanobeschichtung (12) versehen ist, welche eine photokatalytische Selbstreinigung der Oberfläche bewirkt.

2. Optische Regensensorvorrichtung nach Anspruch 1, **dadurch gekennzeichnet, dass** die Oberfläche der wenigstens einen Senderoptikanordnung (3a) und/oder die Oberfläche der wenigstens einen Empfängeroptikanordnung (3b) wenigstens teilweise mit der Nanobeschichtung (12) versehen sind.

3. Optische Regensensorvorrichtung nach Anspruch 1 oder 2, **dadurch gekennzeichnet, dass** die Oberfläche der wenigstens einen Strahlungsquelle (6) und/oder die Oberfläche der wenigstens einen Empfangseinrichtung (7) wenigstens teilweise mit der Nanobeschichtung (12) versehen sind.

4. Optische Regensensorvorrichtung nach Anspruch 1, 2 oder 3, **dadurch gekennzeichnet, dass** die Nanobeschichtung (12) Nanopartikel aus Titandioxid (TiO₂) aufweist.

## Claims

1. Optical rain sensor apparatus for a motor vehicle, having a plurality of components (3a, 3b, 6, 7), namely at least one electromagnetic radiation source (6), at least one receiving device (7), at least one transmitter optics arrangement (3a) and at least one receiver optics arrangement (3b), the at least one receiving device (7) being able to be used to receive electromagnetic radiation (4, 5) emitted by the at least one radiation source (6), the electromagnetic radiation (4, 5) being passed from the at least one radiation source (6) to an interface (10) between the windscreen (1) of the motor vehicle and the outside of the vehicle by means of the at least one transmitter optics arrangement (3a), being reflected at said interface and being passed on to the at least one receiving device (7) by means of the at least one receiver optics arrangement (3b), **characterized in that** the surface of at least one of the components (3a, 3b, 6, 7) is at least partially provided with a nanocoating (12) which effects photocatalytic self-cleaning of the surface.

2. Optical rain sensor apparatus according to Claim 1, **characterized in that** the surface of the at least one transmitter optics arrangement (3a) and/or the surface of the at least one receiver optics arrangement (3b) is/are at least partially provided with the nanocoating (12).

3. Optical rain sensor apparatus according to Claim 1 or 2, **characterized in that** the surface of the at least one radiation source (6) and/or the surface of the at least one receiving device (7) is/are at least partially provided with the nanocoating (12).

4. Optical rain sensor apparatus according to Claim 1, 2 or 3, **characterized in that** the nanocoating (12) has titanium dioxide (TiO₂) nanoparticles.

## Revendications

1. Dispositif optique de détection de pluie pour véhicule automobile, le dispositif présentant plusieurs composants (3a, 3b, 6, 7), à savoir au moins une source (6) de rayonnement électromagnétique, au moins un dispositif de réception (7), au moins un ensemble (3a) d'émetteur optique et au moins un ensemble (3b) de récepteur optique,
le rayonnement électromagnétique (4, 5) émis par la ou les sources (6) de rayonnement pouvant être reçu au moyen du ou des dispositifs de réception (7),
le rayonnement électromagnétique (4, 5) qui provient de la ou des sources (6) de rayonnement étant guidé sur une surface (10) de la vitre (1) de pare-brise du véhicule automobile qui forme la frontière avec l'extérieur du véhicule au moyen du ou des ensembles (3a) de détecteur optique et y étant réfléchi et étant renvoyé sur le ou les dispositifs de réception (7) au moyen du ou des ensembles (3b) de récepteur optique,
**caractérisé en ce que**
au moins une partie de la surface d'au moins un des composants (3a, 3b, 6, 7) est dotée d'un nano-revêtement (12) qui a pour effet un auto-nettoyage photo-catalytique de la surface.

2. Dispositif optique de détection de pluie selon la revendication 1, **caractérisé en ce qu'**au moins une partie de la surface du ou des ensembles (3a) d'émetteur optique et/ou de la surface du ou des ensembles (3b) de récepteur optique est dotée du nano-revêtement (12).

3. Dispositif optique de détection de pluie selon les revendications 1 ou 2, **caractérisé en ce qu'**au moins une partie de la surface de la ou des sources (6) de rayonnement et/ou de la surface du ou des dispositifs de réception (7) est dotée du nano-revêtement (12).

4. Dispositif optique de détection de pluie selon les revendications 1, 2 ou 3, **caractérisé en ce que** le nano-revêtement (12) présente des nanoparticules de dioxyde de titane (TiO₂).
